# EUROPÄISCHE PATENTSCHRIFT

(11) **EP 4 465 096 B1**
(45) Veröffentlichungstag und Bekanntmachung des Hinweises auf die Patenterteilung: **21.01.2026**
(21) Anmeldenummer: 23173804.8
(22) Anmeldetag: 17.05.2023
(51) Int. Cl.: G01V 8/20

(54) **LICHTGITTER**
LIGHT CURTAIN
RIDEAU DE LUMIÈRE

(43) Veröffentlichungstag der Anmeldung: 20.11.2024
(73) Patentinhaber: SICK AG, 79183 Waldkirch (DE)
(72) Erfinder: Dr. Eble, Johannes, 79183 Waldkirch (DE); Dr. Albrecht, Roland, 79312 Emmendingen (DE)
(74) Vertreter: Manitz Finsterwald Patent- und Rechtsanwaltspartnerschaft mbB

(56) Entgegenhaltungen:
- EP-A1- 1 950 584
- EP-A2- 1 892 495
- DE-A1- 102004 038 940
- JP-A- 2014 055 804
- US-A1- 2009 185 164

## Beschreibung

Die vorliegende Erfindung betrifft ein Lichtgitter zum Erfassen von in einem Überwachungsbereich anwesenden Objekten.

Ein Lichtgitter stellt im Prinzip eine Kombination aus mehreren Lichtschranken dar und wird alternativ auch als Lichtvorhang bezeichnet, wobei es mehrere Bauformen von Lichtschranken gibt.

Bei einer Ein-Weg-Lichtschranke sind ein Lichtempfänger und ein Lichtsender auf einander gegenüberliegenden Seiten eines Überwachungsbereichs angeordnet. Bei freiem Überwachungsbereich trifft das von dem Lichtsender ausgesendete Licht auf den Lichtempfänger und wird von diesem in elektrische Signale umgewandelt, welche an eine Auswerteeinheit übermittelt werden. Wenn sich ein Objekt in dem Überwachungsbereich befindet, wird der Lichtlaufweg zwischen dem Lichtempfänger und dem Lichtsender, der entlang einer Empfangsachse verläuft, unterbrochen, wodurch ein Signalabfall detektiert wird und ein entsprechendes Überwachungssignal ausgegeben werden kann.

Bei einer Reflexionslichtschranke sind der Lichtempfänger und der Lichtsender auf derselben Seite des Überwachungsbereichs angeordnet. Das ausgesendete Licht wird von einem auf der gegenüberliegenden Seite des Überwachungsbereichs angeordneten Reflektor in Richtung des Lichtempfängers zurückgeworfen.

Eine weitere Bauform einer Lichtschranke ist der Reflexionslichttaster. Der Lichtempfänger und der Lichtsender befinden sich wie bei der Reflexionslichtschranke auf derselben Seite des Überwachungsbereichs. Im Unterschied zu einer Reflexionslichtschranke erfolgt eine Objektdetektion nicht durch Unterbrechung des Lichtpfads, sondern durch Reflexion des Sendelichts durch ein im Überwachungsbereich anwesendes Objekt in Richtung des Lichtempfängers.

Bei einem Lichtgitter sind mehrere Lichtempfänger und mehrere Lichtsender vorgesehen, wobei mehrere voneinander beabstandete Empfangsachsen definiert sind, die zumeist parallel zueinander in einer Ebene verlaufen, wobei grundsätzlich auch andere geometrische Konfigurationen bezüglich der Anordnung der Empfangsachsen möglich sind, beispielsweise ein nicht paralleler Verlauf der Empfangsachsen. Üblicherweise sind die Lichtempfänger in einer Empfängereinheit und die Lichtsender in einer Sendeeinheit zusammengefasst. Alle vorstehend erläuterten Bauformen von Lichtschranken können auch als Lichtgitter bzw. Lichtvorhang realisiert werden.

Im Vergleich zu einer Lichtschranke ist mit Hilfe eines Lichtgitters die Überwachung eines größeren Überwachungsbereichs möglich. Aufgrund der mehreren Empfangsachsen eines Lichtgitters kann im Rahmen der durch den Abstand der Empfangsachsen vorgegebenen Auflösung auch die Größe und/oder die Lateralposition eines erfassten Objekts ermittelt werden.

Die Empfangsachsen eines Lichtgitters definieren im Zusammenwirken mit einer Auswerteeinheit und ggf. einer Steuereinheit zum Ansteuern der Lichtsender jeweilige Empfangskanäle oder Sichtbereiche. Um ein Übersprechen zwischen benachbarten Empfangskanälen zu vermeiden, kann eine sequentielle Aktivierung der Empfangskanäle vorgesehen sein, so dass beispielsweise zu einem bestimmten Zeitpunkt nur ein Empfangskanal oder zumindest nur eine Teilmenge aller Empfangskanäle aktiv ist. Alle übrigen Empfangskanäle, d.h. die zugehörigen Lichtempfänger bzw. Lichtsender, sind deaktiviert.

Grundsätzlich ist bei herkömmlichen Lichtgittern jedem Empfangskanal ein eigener Lichtempfänger zugeordnet, so dass Lichtgitter mit einer großen Anzahl von Empfangskanälen aufgrund der hierfür benötigten Anzahl von Lichtempfängern entsprechend hohe Produktionskosten verursachen.

In DE 2008 022 791 C5 wird ein Lichtvorhang beschrieben, bei dem mehrere Empfangskanäle einen gemeinsamen Lichtsender und einen gemeinsamen Lichtempfänger aufweisen. Mit Hilfe von optischen Bandpassfiltern wird das breitbandige Sendelicht wellenlängenselektiv auf die verschiedenen Empfangskanäle aufgeteilt. Empfängerseitig ist eine Kanalselektion mit Hilfe eines durchstimmbaren optischen Bandpasses vorgesehen.

Bei der in EP 1 811 427 A1 beschriebenen Vorrichtung zur Überwachung eines Schutzfeldes wird eine Markierung mit Hilfe des Lichtsenders ausgeleuchtet und auf einem ortsauflösenden Lichtempfänger abgebildet. Die Objektdetektion erfolgt durch einen Vergleich eines aktuellen Bildes mit einem abgespeicherten, bei objektfreiem Schutzfeld aufgenommenen Bild der Markierung.

US 2009/185164 A1 betrifft eine Vorrichtung zur Untersuchung von Lebensmitteln, bei welcher Licht in ein Untersuchungsobjekt eingestrahlt wird und vom Objekt gestreutes oder reflektiertes Licht mittels einer Detektoreinheit erfasst wird. Es sollen damit Fremdkörper wie Haare oder andere Rückstände am oder im Objekt detektiert werden können. Gemäß einem Ausführungsbeispiel können zwei verschiedene Objekte gemeinsam untersucht werden können. Hierfür sind zwei Empfangskanäle vorgesehen, welche mittels einer Anordnung von mehreren Umlenkspiegeln in Richtung auf die gemeinsame Detektoreinheit umgelenkt werden. Das durch die beiden Empfangslichtpfade verlaufende Empfangslicht wird von zwei verschiedenen Bereichen der Empfangslichtfläche der Detektoreinheit erfasst, welche sich einander nicht überlappen.

JP 2014 055804 A bezieht sich auf eine Vorrichtung zur Erfassung der Anwesenheit oder Abwesenheit von Objekten in einem Überwachungsbereich ähnlich einem Lichtgitter mit mehreren Empfangskanälen. Im Bereich zwischen Empfangslinsen bzw. Eingangsaperturen und einem einzigen Lichtempfänger wird ein Teil der einzelnen Empfangslichtpfade umgelenkt.

EP 1 950 584 A1, EP 1 892 495 A2 und DE 10 2004 038 940 A1 zeigen optoelektronische Sensoren mit Umlenkelementen.

Es ist die Aufgabe der Erfindung, ein Lichtgitter anzugeben, welches einen reduzierten Kosten- und Fertigungsaufwand aufweist.

Die Lösung der Aufgabe erfolgt durch ein Lichtgitter mit den Merkmalen des Anspruchs 1. Unteransprüche sind auf bevorzugte Ausgestaltungen gerichtet.

Ein erfindungsgemäßes Lichtgitter zum Erfassen von in einem Überwachungsbereich anwesenden Objekten umfasst wenigstens ein Empfangsmodul, wobei das wenigstens eine Empfangsmodul einen ortsauflösenden Lichtempfänger mit einer lichtempfindlichen Empfangsfläche und wenigstens ein Umlenkelement umfasst und wenigstens zwei Empfangskanäle aufweist, wobei jeder Empfangskanal eine jeweilige Lichteintrittsapertur und eine durch die Lichteintrittsapertur verlaufende Empfangsachse aufweist, wobei die Empfangsfläche in wenigstens zwei einander nicht überlappende Teilflächen aufgeteilt ist, wobei jedem Empfangskanal eine jeweilige Teilfläche zugeordnet ist, und wobei zumindest ein Teil der Empfangsachsen durch das wenigstens eine Umlenkelement verläuft.

Die Lichteintrittsapertur definiert sozusagen einen Sichtbereich des zugeordneten Empfangskanals, d.h. einen Raumbereich oder Raumwinkelbereich, aus dem Empfangslichtsignale erfasst und in Richtung des Lichtempfängers weitergeleitet werden. Der Begriff "Empfangskanal" bezieht sich hauptsächlich auf die optischen bzw. optoelektronischen Komponenten, die einem jeweiligen Sichtbereich oder einer jeweiligen Empfangsachse zugeordnet sind. In einem übertragenen Sinne kann sich der Begriff "Empfangskanal" auch auf einen entsprechenden logischen Kanal erstrecken, welcher schaltungstechnisch in einer dem Lichtgitter zugeordneten Auswerteeinheit definiert sein kann.

Durch die Verwendung eines ortsauflösenden Lichtempfängers ist es möglich, für zwei oder auch mehr Empfangskanäle nur einen einzigen Lichtempfänger vorzusehen. Eine empfängerseitige Trennung der Empfangskanäle erfolgt dadurch, dass das Empfangslicht der verschiedenen Empfangskanäle auf die verschiedenen einander nicht überlappenden Teilflächen der Empfangsfläche des Lichtempfängers gelenkt werden, wodurch die gewünschte Kanaltrennung erreicht wird. Der Begriff "nicht überlappende Teilflächen" bezeichnet nicht zwingend eine physische, sondern auch eine logische Aufteilung der Empfangsfläche, die beispielsweise innerhalb einer mit dem Lichtempfänger verbundenen Auswerteeinheit vorgenommen werden kann. So kann beispielsweise ein Bildsensor mit in Reihen und Spalten angeordneten lichtempfindlichen Empfangselementen (Pixeln) verwendet werden, dessen Bildfläche in sogenannte nicht überlappende ROls (von Englisch "Region Of Interest") aufgeteilt wird. Im einfachen Fall kann jedoch der Lichtempfänger auch durch einen zweikanaligen PSD-Empfänger (von Englisch "Position Sensitive Device") gebildet werden.

In jedem Empfangskanal kann aus den empfangenen Lichtsignalen ein jeweiliger Empfangslichtfleck erzeugt werden, der auf die diesem Empfangskanal zugeordnete Teilfläche des Lichtempfängers trifft.

Das wenigstens eine Umlenkelement dient insbesondere dazu, einen gewünschten Abstand der Lichteintrittsaperturen eines Empfangsmoduls an den durch die Geometrie des Lichtempfängers vorgegebenen Abstand der Teilflächen der Empfangsfläche anzupassen. Dazu kann das Umlenkelement Lichtsignale, die sich entlang der zugeordneten Empfangsachse ausbreiten und die Lichteintrittsapertur passieren, einmal oder mehrmals umlenken.

Grundsätzlich kann ein Empfangsmodul so ausgestaltet sein, dass alle Empfangsachsen bzw. alle Empfangskanäle durch das Umlenkelement verlaufen. Es ist jedoch auch denkbar, dass beispielsweise bei einem dreikanaligen Empfangsmodul zwei Kanäle durch ein gemeinsames Umlenkelement oder auch durch zwei separate Umlenkelemente verlaufen und in einem dritten Empfangskanal die Lichtsignale auf direktem Weg, d.h. ohne Umlenkung, auf die zugeordnete Teilfläche des Lichtempfängers gelangen.

Das oder die Umlenkelemente eines jeweiligen Empfangsmoduls können als separate, kanalgetrennte Bauteile oder als ein integriertes Bauteil für mehrere Empfangskanäle ausgebildet sein.

Grundsätzlich ist es möglich, dass ein erfindungsgemäßes Lichtgitter nur ein einziges Empfangsmodul aufweist. Vorteilhafterweise umfasst das Lichtgitter jedoch mehrere, bevorzugt gleichartige Empfangsmodule, so dass ein entsprechend großer Überwachungsbereich überwacht werden kann. Ein Vorteil besteht in jedem Fall darin, dass die Anzahl der benötigten Lichtempfänger kleiner ist als die Anzahl der vorhandenen Empfangskanäle. Dadurch ist eine platzsparende Anordnung der Lichtempfänger in einer gemeinsamen Empfängereinheit möglich. Zugleich reduziert sich aufgrund der vergleichsweise geringeren Anzahl von Lichtempfängern der Material- und Fertigungsaufwand, was einen deutlichen Kostenvorteil mit sich bringt.

Ein weiterer Vorteil besteht darin, dass unabhängig von einem gewünschten Rastermaß für die Anordnung der Lichteintrittsaperturen bzw. der Empfangsoptiken eine universelle Leiterkarte verwendet werden kann, auf welcher ein oder bevorzugt auch mehrere Lichtempfänger, d.h. die Lichtempfänger einer Mehrzahl von Empfangsmodulen, angeordnet werden können. Die Anpassung an ein gewünschtes Rastermaß erfolgt dann durch eine entsprechende Dimensionierung der Umlenkelemente.

Das erfindungsgemäße Lichtgitter kann entsprechend der vorstehend erläuterten Bauformen von Lichtschranken als Ein-Weg-Lichtgitter, Reflexionslichtgitter oder als tastendes Lichtgitter realisiert werden.

Gemäß einer bevorzugten Ausführungsform weisen die Lichteintrittsaperturen von zwei benachbarten Empfangskanälen einen jeweiligen Basisabstand auf, welcher größer ist als der Abstand der diesen Empfangskanälen zugeordneten Teilflächen. Unter den Begriffen "Abstand" bzw. "Basisabstand" werden insbesondere die jeweiligen Mittenabstände der betreffenden Empfangskanäle verstanden. Bei dieser Ausgestaltung kann beispielsweise ein jeweiliges Umlenkelement die Empfangsachse zunächst um 90° und nach einer bestimmten Distanz erneut um 90° in die entgegengesetzte Richtung umlenken, so dass die Empfangsachse einen bestimmten lateralen Versatz erfährt. Auf diese Weise kann der Abstand der Empfangskanäle innerhalb des zugeordneten Empfangsmoduls soweit reduziert werden, dass die Empfangskanäle eines jeweiligen Empfangsmoduls auf den gemeinsamen Lichtempfänger gelenkt werden.

Gemäß einer weiteren vorteilhaften Ausführungsform ist das Umlenkelement als eine Spiegelanordnung, als ein Prismenelement oder als ein Lichtwellenleiter ausgebildet. Bei einer Ausgestaltung des Umlenkelements als Prismenelement oder Lichtwellenleiter erfolgt die Umlenkung durch innere Reflexion an den Wandungen des Prismenelements bzw. des Lichtwellenleiters. Das Umlenkelement kann beispielsweise aus transparentem Vollmaterial wie beispielsweise Glas oder Kunststoff oder auch als Hohlelement hergestellt sein. Die Außenwandungen können zur Verbesserung der Reflexionseigenschaften mit einem reflektierenden Material beschichtet sein, beispielsweise mit einer Metallbedampfung. Bevorzugt wird jedoch das Umlenkelement derart ausgestaltet, dass an dessen Wandungen eine Totalreflexion auftritt, so dass auf eine kostenverursachende zusätzliche Beschichtung verzichtet werden kann. Grundsätzlich kann das Umlenkelement auch als eine Spiegelanordnung mit einer oder mehreren Spiegelflächen ausgestaltet sein.

Gemäß einer weiteren vorteilhaften Ausführungsform umfasst das Lichtgitter eine Sendeanordnung zum Aussenden von Lichtsignalen in den Überwachungsbereich, wobei das Lichtgitter zum Ermitteln der Distanz zu einem in dem Überwachungsbereich anwesenden Objekt auf der Grundlage der Lichtlaufzeit der von der Sendeanordnung ausgesendeten, von einem Objekt remittierten und von dem Lichtempfänger erfassten Lichtsignale eingerichtet ist. Diese Ausführungsform kann auch als ein sogenanntes tastendes TOF-Lichtgitter (von English "Time Of Flight") bezeichnet werden. Bei dieser vorteilhaften Ausgestaltung können die Sendeanordnung und die Lichtempfänger mit einer Steuereinheit bzw. einer kombinierten Auswerte- und Steuereinheit verbunden sein, welche die Sendeanordnung zum Aussenden der Lichtsignale, zum Beispiel in Form eines oder mehrerer Lichtpulse, ansteuern und die elektrischen Empfangssignale, welche von dem Lichtempfänger auf der Grundlage der erfassten Lichtsignale erzeugt wurden, auswerten kann, um die Lichtlaufzeit zwischen dem Zeitpunkt der Aussendung eines Lichtsignals und dessen Empfang zu bestimmen und daraus die Distanz zum Objekt zu ermitteln.

Vorteilhafterweise umfasst der Lichtempfänger ein SPAD-Array. Ein derartiges SPAD-Array ist ein Array bzw. eine zweidimensionale Matrix von Einzelphoton-Avalanche-Dioden, wobei SPAD die Abkürzung für den englischen Begriff "Single Photon Avalanche Diode" ist. Derartige SPAD-Arrays sind für eine Distanzmessung auf der Grundlage der Lichtlaufzeit besonders geeignet. Bei SPAD-Arrays können in der Regel einzelne ROls definiert werden, wobei nur diejenigen Pixel bzw. Diodenelemente des SPAD-Arrays für die Auswertung herangezogen werden, welche tatsächlich von einem jeweiligen Empfangslichtfleck beleuchtet werden.

Durch die Nichtberücksichtigung bzw. Deaktivierung der unbeleuchteten Pixel oder Einzeldioden kann das Signal-Rausch-Verhältnis reduziert werden. Diese Möglichkeit zur Definition von ROls kann auch für die Aufteilung der Empfangsfläche in die genannten Teilflächen genutzt werden.

Gemäß einer weiteren vorteilhaften Ausführungsform ist die Lichteintrittsapertur eines jeweiligen Empfangskanals durch zumindest eine Blende definiert, welche zwischen einer dem Umlenkelement vorgeordneten Empfangsoptik und einer Lichteintrittsfläche des Umlenkelements und/oder zwischen einer Lichtaustrittsfläche des Umlenkelements und dem Lichtempfänger vorgesehen ist. Die Blende bestimmt zumindest überwiegend das Gesichtsfeld eines jeweiligen Empfangskanals für jeweilige Strahlen der Empfangslichtsignale und ist bevorzugt so gewählt, dass ein Übersprechen von Empfangslichtsignalen in benachbarte Empfangskanäle zumindest für Objekte, deren Abstand vom Lichtgitter innerhalb der Grenzen eines definierten Erfassungsbereichs des Lichtgitters liegt, vermieden wird, um eine gewünschte laterale Auflösung des Lichtgitters zu erreichen. Die genannte vorgeordnete Empfangsoptik ist in der Ausbreitungsrichtung der empfangenen Lichtsignale betrachtet vor dem Umlenkelement vorgesehen.

Jeder Empfangskanal kann eine oder mehrere zugeordnete Empfangsoptiken aufweisen. Die Empfangsoptiken verschiedener Empfangskanäle können bevorzugt als ein Linsenarray ausgebildet sein, bei dem mehrere Linsen in einem gemeinsamen integrierten oder monolithischen Bauelement ausgebildet sind. Bei Verwendung desselben Materials oder zumindest von Materialien von ähnlichen oder gleichen Temperaturausdehnungskoeffizienten für das Umlenkelement und das Linsenarray erfolgt eine temperaturbedingte Längenänderung mit dem gleichen Maß, so dass sich beispielsweise der Abstand zwischen den Empfangsoptiken eines Empfangsmoduls und der durch das wenigstens eine Umlenkelement erzeugte Versatz der Empfangsachsen im gleichen Maß ändern, so dass die Sichtbereiche der einzelnen Empfangskanäle auch bei Temperaturänderungen gleich bleiben und insbesondere eine parallele Ausrichtung der Empfangskanäle auch bei Temperaturänderungen erhalten bleibt.

Vorteilhafterweise ist die Blende in der Bildebene der Empfangsoptik angeordnet. Alternativ oder zusätzlich kann eine Blende auf einer Lichteintrittsfläche oder einer Lichtaustrittsfläche des Umlenkelements angeordnet sein. Die Blende kann beispielsweise direkt auf der Lichteintrittsfläche oder der Lichtaustrittsfläche des Umlenkelements aufgebracht oder erzeugt werden. Alternativ kann auch ein separater Blendenträger vorgesehen sein. Das Erzeugen der Blende auf dem Umlenkelement oder auch auf einem separaten Blendenträger kann beispielsweise durch Aufbringen einer entsprechenden Beschichtung unter der Verwendung von Masken oder in Form einer sogenannten lasererzeugten Blende geschaffen werden, wobei die Blende durch Einbringung von energiereicher Laserstrahlung in das sich im (teil-)zusammengebauten Zustand befindende optische System an der vorgesehenen Stelle durch Energieabgabe erzeugt wird. Dieses Verfahren ist beispielsweise in DE 10 2018 128 669 A1 beschrieben.

Erfindungsgemäß sind Lichteintrittsfläche, Lichtaustrittsfläche und/oder zumindest eine Reflexionsfläche eines jeweiligen Umlenkelements mit einer optisch wirksamen Geometrie ausgebildet. Eine jeweilige optisch wirksame Geometrie verleiht dem Umlenkelement zusätzlich strahlformende Eigenschaften, zum Beispiel durch eine konvexe oder konkave Krümmung einer oder mehrerer der genannten Flächen. Dadurch reduziert sich die Anzahl der zu montierenden und zu justierenden optischen Elemente, wodurch der Fertigungsaufwand und auch potentielle Quellen für Justierungsfehler reduziert werden können.

Vorteilhafterweise ist ein jeweiliges Umlenkelement derart ausgestaltet und angeordnet, dass mittels der optisch wirksamen Geometrie des Umlenkelements eine Apertur der zugeordneten Empfangsoptik auf die Empfangsfläche abgebildet wird. Die Größe des Empfangslichtflecks auf dem Lichtempfänger hängt damit hauptsächlich von der Größe der Empfangsoptik und der Geometrie des der Empfangsoptik nachgeordneten Strahlengangs ab.

Gemäß einer weiteren vorteilhaften Ausführungsform weist das Lichtgitter zumindest eine Leiterkarte auf, welche eine dem Überwachungsbereich abgewandte und eine dem Überwachungsbereich zugewandte Seite aufweist, wobei ein der Leiter zugeordneter Lichtempfänger auf der dem Überwachungsbereich abgewandten Seite angeordnet ist. Somit weist die lichtempfindliche Empfangsfläche vom Überwachungsbereich weg. In dem Fall ist das Umlenkelement derart ausgebildet, dass eine jeweilige Empfangsachse in der Größenordnung von 180° umgelenkt wird. Bei der genannten Leiterkarte kann es sich beispielsweise um eine gemeinsame Leiterkarte für mehrere Lichtempfänger bzw. Empfangsmodule handeln. Grundsätzlich kann jedoch auch eine separate Leiterkarte für jedes Empfangsmodul bzw. für jeden Lichtempfänger vorgesehen werden.

Grundsätzlich kann auch bei Ausführungsformen, bei denen die lichtempfindliche Empfangsfläche in Richtung des Überwachungsbereichs weist, eine gemeinsame Leiterkarte für mehrere Lichtempfänger bzw. Empfangsmodule vorgesehen werden.

Gemäß einer weiteren vorteilhaften Ausführungsform weist das Lichtgitter mehrere Empfangsmodule auf, welche derart verschränkt angeordnet sind, dass eine Lichteintrittsapertur eines Empfangsmoduls zwischen zwei Lichteintrittsaperturen eines anderen Empfangsmoduls vorgesehen ist, wobei bevorzugt alle Lichteintrittsaperturen des Lichtgitters entlang einer gemeinsamen Achse angeordnet sind.

Durch eine derartige Anordnung kann das Auftreten von Übersprechen zwischen verschiedenen Empfangskanälen weiter reduziert werden.

Vorteilhafte Weiterbildungen der Erfindung sind auch in den abhängigen Ansprüchen, der Beschreibung sowie den Zeichnungen angegeben. Die Ansprüche, die Beschreibung und die Zeichnungen enthalten zahlreiche Merkmale in Kombination. Der Fachmann wird diese Merkmale zweckmäßigerweise auch einzeln betrachten und zu sinnvollen weiteren Kombinationen zusammenfassen.

Die Erfindung wird nachfolgend beispielhaft anhand von Zeichnungen beschrieben. Die Darstellungen in den Figuren sind nicht als maßstabsgetreu zu verstehen. Es zeigen:
- Fig. 1: eine schematische Seitenansicht eines Lichtgitters gemäß einem erfindungsgemäßen, ersten Ausführungsbeispiel;
- Fig. 2: eine schematische Draufsicht auf einen Lichtempfänger des Lichtgitters gemäß Fig. 1;
- Fig. 3: eine schematische Seitenansicht eines Lichtgitters gemäß einem erfindungsgemäßen, zweiten Ausführungsbeispiel;
- Fig. 4: eine schematische Seitenansicht eines Lichtgitters gemäß einem erfindungsgemäßen, dritten Ausführungsbeispiel;
- Fig. 5: eine schematische Seitenansicht eines Lichtgitters gemäß einem nicht beanspruchten, vierten Ausführungsbeispiel;
- Fig. 6: eine schematische Seitenansicht eines Lichtgitters gemäß einem erfindungsgemäßen, fünften Ausführungsbeispiel;
- Fig. 7: eine schematische Seitenansicht eines Lichtgitters gemäß einem erfindungsgemäßen, sechsten Ausführungsbeispiel; und
- Fig. 8: eine schematische Teildarstellung in Draufsicht eines Lichtgitters gemäß einem erfindungsgemäßen, siebten Ausführungsbeispiel.

Im Folgenden werden gleiche oder gleichartige Komponenten oder Elemente mit den gleichen Bezugszeichen bezeichnet.

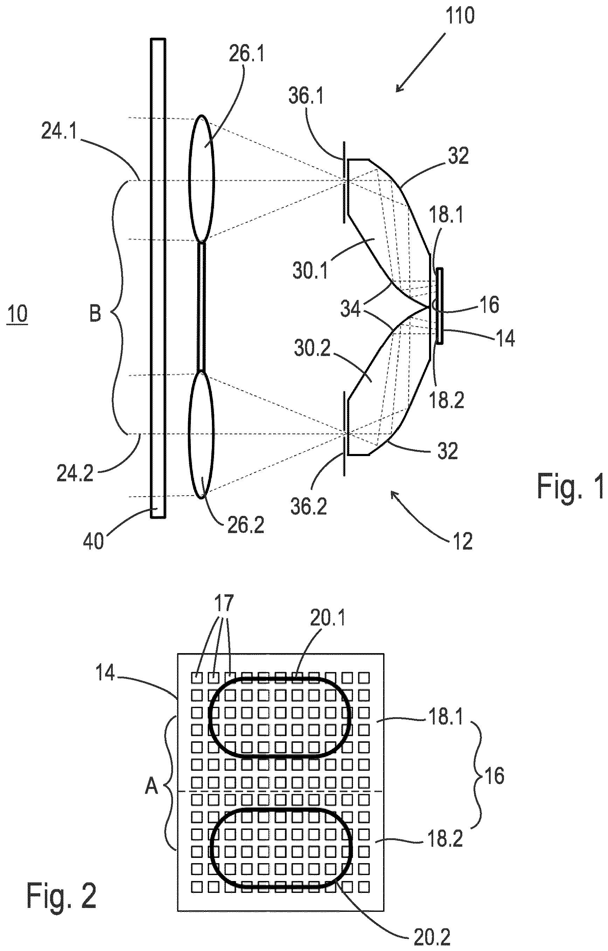

In Fig. 1 ist ein Lichtgitter 110 zum Erfassen von in einem Überwachungsbereich 10 anwesenden Objekten gemäß einem ersten Ausführungsbeispiel dargestellt. Ein Empfangsmodul 12 des Lichtgitters 110 umfasst einen ortsauflösenden Lichtempfänger 14, zwei Umlenkelemente 30.1, 30.2, zwei Blenden 36.1, 36.2, zwei Empfangsoptiken 26.1, 26.2 und eine gemeinsame Frontscheibe 40.

Auf der dem Empfangsmodul 12 gegenüberliegenden Seite des Überwachungsbereichs 10 kann eine nicht dargestellte Sendeeinheit angeordnet sein, welches Sendelicht in den Überwachungsbereich abstrahlt, das von dem Empfangsmodul 12 erfasst wird.

Die beiden Empfangsoptiken 26.1, 26.2 sind mit einem Basisabstand B lateral voneinander beabstandet angeordnet und in einem integrierten Bauteil ausgebildet, welches auch als Optikmodul oder Linsenarray bezeichnet werden kann.

Das Empfangslicht breitet sich entlang von zwei Empfangsachsen 24.1, 24.2 aus, welche jeweils durch die Linsenmitten der beiden Empfangsoptiken 26.1, 26.2 verlaufen. Das von den Empfangsoptiken 26.1, 26.2 gebündelte Empfangslicht tritt anschließend in ein jeweiliges Umlenkelement 30.1 bzw. 30.2 ein, welches als Lichtwellenleiter oder Prismenelement ausgebildet ist. In jedem Umlenkelement 30.1, 30.2 erfolgt zunächst eine erste Umlenkung an einer ersten Reflexionsfläche 32, wobei der Umlenkwinkel etwas mehr als 90° beträgt. Anschließend erfolgt eine zweite Umlenkung an einer zweiten Reflexionsfläche 34, wobei der Reflexionswinkel hier annähernd 90° beträgt. Beide Umlenkungen sind einander entgegengesetzt gerichtet, so dass die Austrittsrichtung aus den Umlenkelementen 30.1, 30.2, bezogen auf die Empfangsachsen 24.1 bzw. 24.2, annähernd gleich der Eintrittsrichtung des Empfangslichts in die Umlenkelemente 30.1, 30.2 ist. Die jeweiligen ersten und zweiten Reflexionsflächen 32, 34 sind konkav gekrümmt und weisen somit zusätzlich strahlformende Eigenschaften auf.

Die beiden Umlenkelemente 30.1, 30.2 sind im vorliegenden Ausführungsbeispiel spiegelsymmetrisch zueinander ausgebildet und derart angeordnet, dass sich der ursprüngliche Abstand der Empfangsachsen 24.1, 24.2 soweit verringert, dass beide Empfangslichtbündel von dem einzigen Lichtempfänger 14 erfasst werden können. Der Abstand der Empfangsachsen 24.1, 24.2 wird im Prinzip auf den Mittenabstand A der Teilflächen 18.1, 18.2 verringert.

Der in Fig. 2 in Draufsicht dargestellte ortsauflösende Lichtempfänger 14 weist eine Empfangsfläche 16 auf, welche eine Vielzahl von in Zeilen und Spalten angeordneten lichtempfindlichen Empfangselementen 17 (z.B. SPAD-Elemente) aufweist, welche schematisch durch kleine Quadrate repräsentiert sind. Die Empfangsfläche 16 ist im Ausführungsbeispiel in zwei Teilflächen 18.1, 18.2 unterteilt, wobei eine gestrichelte Linie die Grenze zwischen den beiden Teilflächen 18.1, 18.2 markiert.

Mit Hilfe der Empfangsoptiken 26.1, 26.2 werden die sich entlang der Empfangsachsen 24.1, 24.2 ausbreitenden Sendelichtbündel in der Ebene der Empfangsfläche 16 zu einem jeweiligen Empfangslichtfleck 20.1, 20.2 gebündelt. Hierbei wird das sich entlang der Empfangsachse 24.1 ausbreitende Empfangslicht in den Empfangslichtfleck 20.1 fokussiert, während sich das entlang der Empfangsachse 24.2 ausbreitende Sendelichtbündel in den Empfangslichtfleck 20.2 fokussiert wird. Das Empfangsmodul 12 ist dabei so konfiguriert und justiert, dass der Empfangslichtfleck 20.1 vollständig auf der Teilfläche 18.1 und der Empfangslichtfleck 20.2 vollständig auf der Teilfläche 18.2 auftrifft. Der Abstand der Empfangslichtflecke 20.1., 20.2 entspricht im Wesentlichen dem Mittenabstand A der Teilflächen 18.1, 18.2.

Die beiden Empfangsachsen 24.1, 24.2 bilden zusammen mit den Teilflächen 18.1, 18.2 einen jeweiligen Empfangskanal, wobei die Empfangsoptiken 26.1, 26.2 und die Umlenkelemente 30.1, 30.2 entsprechend der Darstellung in Fig. 1 einem dieser Empfangskanäle zugeordnet sind.

Insbesondere um ein Übersprechen von Empfangslicht zwischen benachbarten Kanälen zu vermeiden, werden die Gesichtsfelder oder "Blickwinkel" der jeweiligen Empfangslichtbündel mit Hilfe von Blenden 36.1, 36.2 begrenzt. Durch ein Zusammenwirken der strahlformenden Eigenschaften der Umlenkelemente 30.1, 30.2 mit den Eintrittspupillen der Empfangsoptiken 26.1, 26.2 kann die Größe der Empfangslichtflecke 20.1, 20.2 derart begrenzt werden, dass zwischen den beiden Empfangslichtflecken 20.1, 20.2 noch ein gewisser Sicherheitsabstand verbleibt oder zumindest keine Überlappung entsteht. Dadurch erfasst jede Teilfläche 18.1, 18.2 nur Licht aus dem jeweils zugeordneten Empfangskanal.

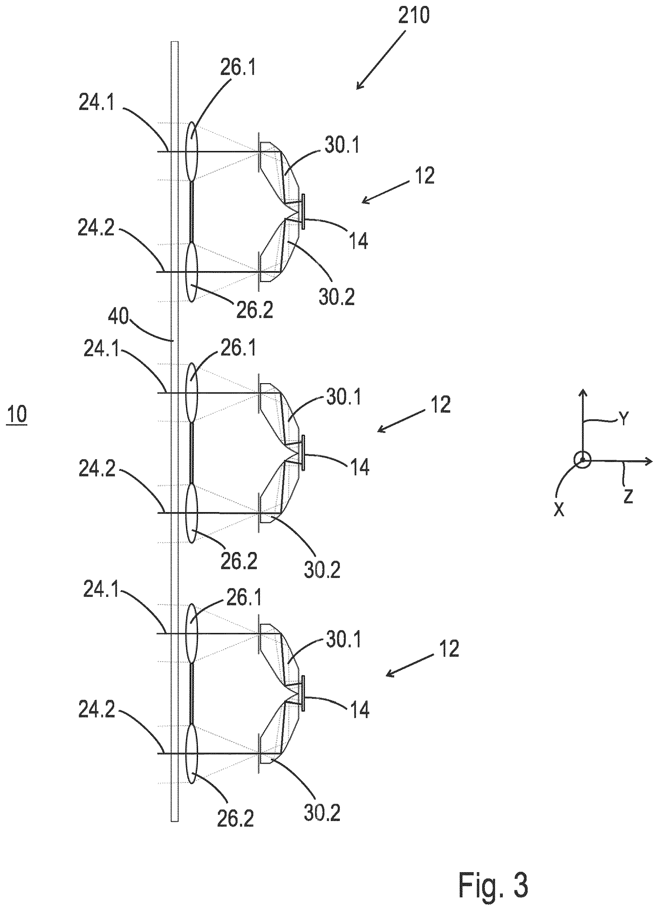

Fig. 3 zeigt ein Lichtgitter 210 gemäß einem zweiten Ausführungsbeispiel. Das Lichtgitter 210 umfasst drei gleichartige Empfangsmodule 12, die in ihrer Ausgestaltung dem Empfangsmodul 12 von Fig. 1 entsprechen und entlang einer in y-Richtung verlaufenden Achse angeordnet sind. Aus Gründen der Übersichtlichkeit sind anstelle der Sendelichtbündel lediglich die Empfangsachsen 24.1, 24.2 eingezeichnet. Die Abstände der einzelnen Empfangsmodule 12 in der y-Richtung sind so gewählt, dass alle Empfangskanäle bzw. Empfangsachsen 24.1, 24.2 im jeweils gleichen Abstand voneinander innerhalb der Zeichenebene verlaufen. Die Frontscheibe 40 ist als eine durchgehende Frontscheibe 40 ausgebildet, welche sich über alle sechs Empfangskanäle erstreckt.

Gemäß einer Abwandlung können alle sechs Empfangslinsen 26.1, 26.2 in einem gemeinsamen Linsenarray oder Optikmodul integriert sein (nicht dargestellt).

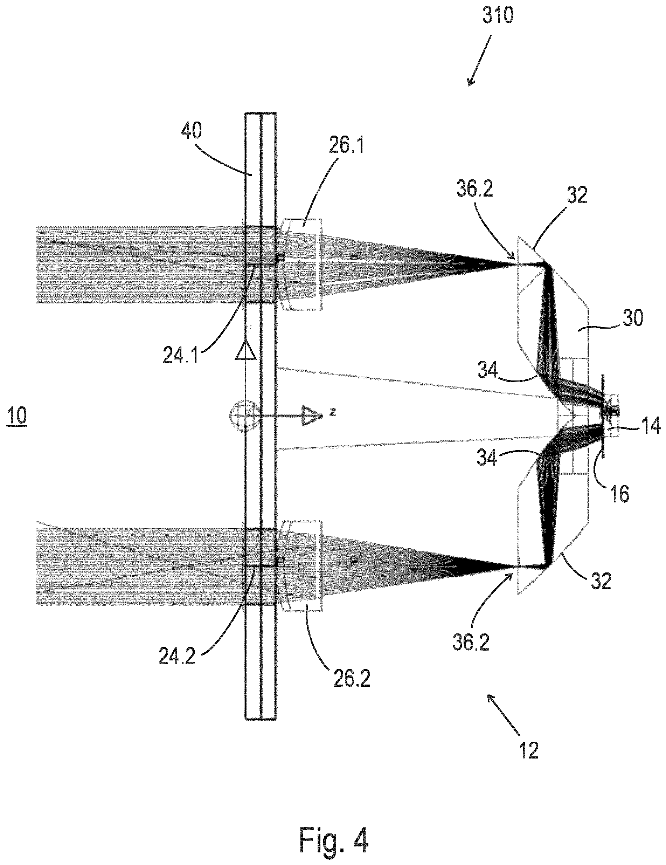

In Fig. 4 ist ein Lichtgitter 310 gemäß einem dritten Ausführungsbeispiel dargestellt. Der Aufbau des Lichtgitters 310 entspricht in wesentlichen Aspekten dem Aufbau des Lichtgitters 110 von Fig. 1, so dass nachfolgend nur die wesentlichen Unterschiede beschrieben werden. Anstelle eines Optikmoduls mit den beiden Empfangsoptiken 26.1, 26.2 sind diese als Einzelelemente ausgeführt. Im Unterschied zum Ausführungsbeispiel gemäß Fig. 1 ist anstelle der beiden separaten Umlenkelemente 30.1, 30.2 ein integriertes Umlenkelement 30 vorgesehen, welches funktional jedoch der benachbarten Anordnung von zwei separaten Umlenkelementen 30.1, 30.2 entspricht. Ein weiterer Unterschied besteht darin, dass die Blenden 36.1, 36.2 nicht als separate Bauelemente (wie in Fig. 1 dargestellt), sondern auf die jeweiligen Lichteintrittsflächen des Umlenkelements 30 aufgebracht sind, beispielsweise in Form einer darauf abgeschiedenen Beschichtung oder Bedampfung. Ferner weisen die Reflexionsflächen 32, 34 des Umlenkelements 30 einen etwas größeren Krümmungsradius auf.

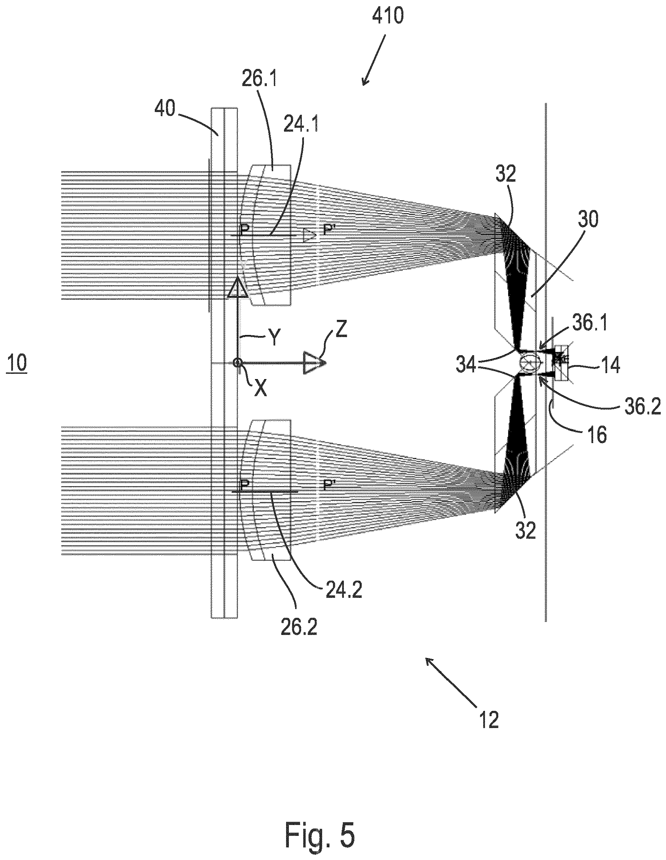

Fig. 5 zeigt ein Lichtgitter 410 gemäß einem nicht beanspruchten, vierten Ausführungsbeispiel, welches im Wesentlichen dem Lichtgitter 310 von Fig. 4 entspricht. Im Unterschied zu Fig. 4 sind die Blenden 36.1, 36.2 nicht auf der Lichteintrittsseite des Umlenkelements 30 aufgebracht, sondern an dessen Lichtaustrittsseite. Die Blenden 36.1, 36.2 können hier beispielsweise mit Hilfe eines Bearbeitungslasers unmittelbar auf der Lichtaustrittsseite hergestellt werden, indem der Bearbeitungslaser derart fokussiert wird, dass sich dessen Brennpunkt in der Ebene der Lichtaustrittsseite des Umlenkelements 30 befindet. Ferner sind die Reflexionsflächen 32, 34 des Umlenkelements 30 des Lichtgitters 410 nicht gekrümmt sondern plan und damit keine optisch wirksame Geometrie aufweisend.

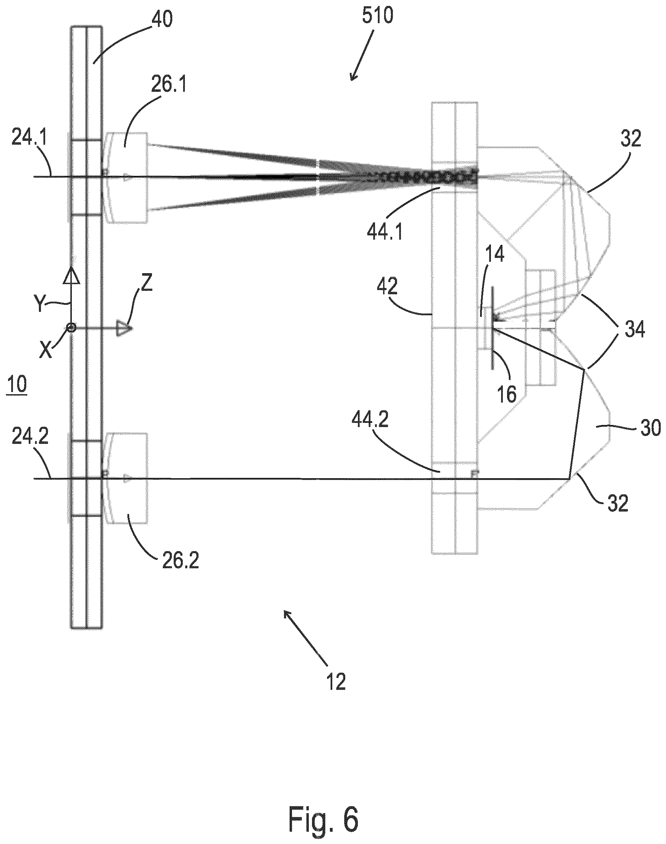

In Fig. 6 ist ein Lichtgitter 510 gemäß einem fünften Ausführungsbeispiel dargestellt. Im Unterschied zu den Lichtgittern 110 bis 410 befindet sich die Empfangsfläche 16 des Lichtempfängers 14 auf einer dem Überwachungsbereich 10 abgewandten Seite. Der Lichtempfänger 14 ist hierbei auf einer Leiterkarte 42 angeordnet, welche Durchtrittsöffnungen 44.1, 44.2 für das Empfangslicht aufweist. Um die notwendige Richtungsumkehr des Empfangslichts mit einen Winkel von ungefähr 180° zu bewirken, weist das Umlenkelement 30 gegenüber den Umlenkelementen 30, 30.1, 30.2 der Lichtgitter 110 bis 410 eine etwas abweichende Geometrie auf. Es sind nur die zweiten Reflexionsflächen 34 aufgrund ihrer konkaven Krümmung optisch wirksam. Die ersten Reflexionsflächen 32 sind plan und damit optisch nicht wirksam.

Der Vorteil dieses Ausführungsbeispiels besteht darin, dass bei einer vorgegebenen Bautiefe des Empfangsmoduls 12, d.h. seiner Ausdehnung in z-Richtung, eine vergleichsweise längere Bildweite des Empfangslichtpfads realisiert werden kann. Ein weiterer Vorteil besteht darin, dass der Lichtempfänger 14 durch die Leiterkarte 42 besser vor Störlichteinflüssen abgeschirmt ist.

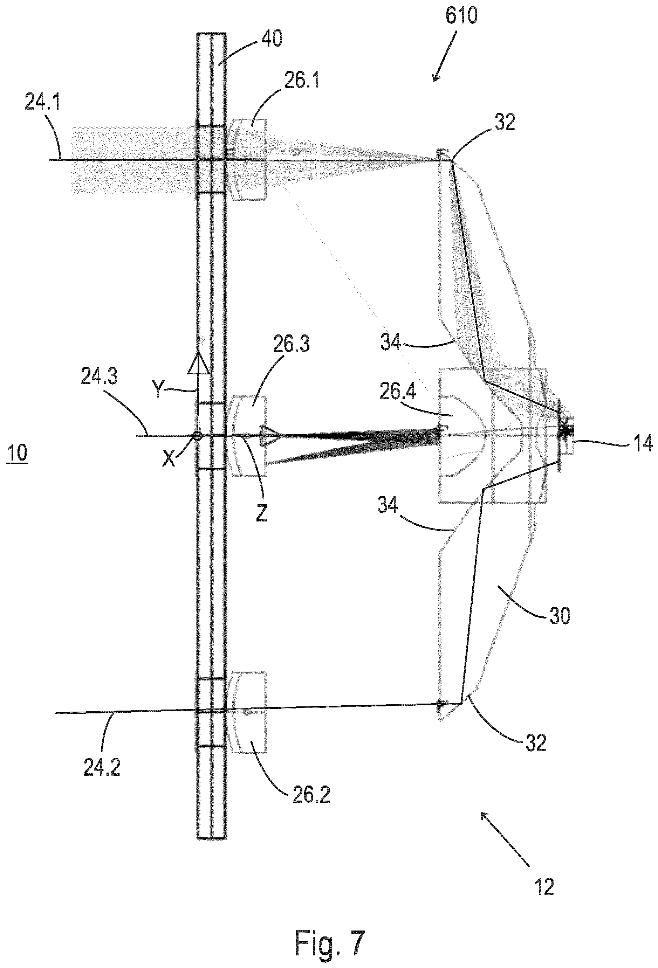

Fig. 7 zeigt ein Lichtgitter 610 gemäß einem sechsten Ausführungsbeispiel, welches ähnlich wie das Lichtgitter 310 (Fig. 4) aufgebaut ist. Im Unterschied zu den anderen Ausführungsbeispielen weist das Empfangsmodul 12 des Lichtgitters 610 zusätzlich einen dritten Empfangskanal auf, welcher mittig zwischen dem ersten und dem zweiten Empfangskanal angeordnet ist. Dementsprechend weist der Lichtempfänger 14 insgesamt drei in Reihe angeordnete Teilflächen auf. Im Unterschied zu den Empfangsachsen 24.1, 24.2 wird die Empfangsachse 24.3 des dritten Empfangskanals nicht umgelenkt, da im Empfangslichtpfad des dritten Empfangskanals keine entsprechenden Flächen des Umlenkelements 30 vorhanden sind, sondern lediglich ein planparalleler Abschnitt bzw. eine Öffnung. Um im dritten Empfangskanal auch ohne optisch wirksame Flächen des Umlenkelements 30 eine ausreichende Strahlformung zu erzielen, ist zusätzlich zu der Empfangsoptik 26.3, die baugleich zu den Empfangsoptiken 26.1, 26.2 ausgestaltet ist, eine weitere Empfangsoptik 26.4 vorgesehen, welche sich zwischen der Empfangsoptik 26.3 und dem Umlenkelement 30 befindet.

Es versteht sich, dass gemäß nicht dargestellter Abwandlungen auch bei den Lichtgittern 310 bis 610 (Fig. 4 bis 7) mehrere Empfangsmodule 12 vorgesehen werden können, welche in Reihe oder auch in anderer Konfiguration angeordnet werden können.

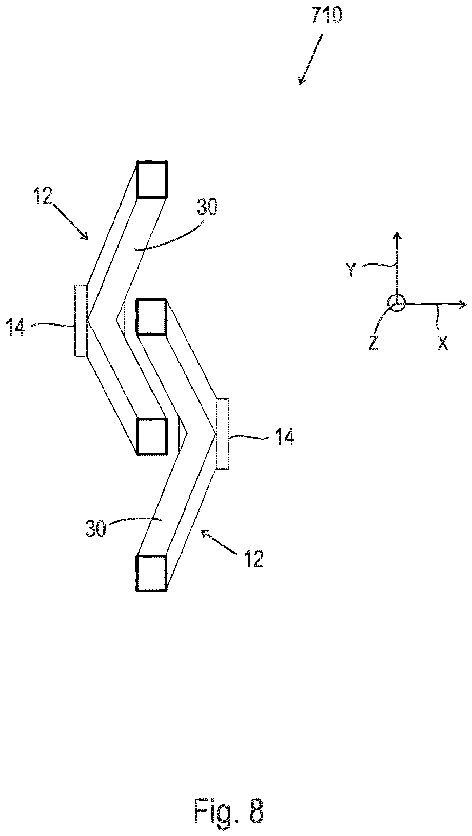

Mit Bezug auf Fig. 8 wird ein weiteres Lichtgitter 710 gemäß einem siebten Ausführungsbeispiel beschrieben. Im Unterschied zu den Darstellungen der Fig. 1 und 3 bis 7 zeigt Fig. 8 eine Draufsicht auf das Lichtgitter 710. Zur Vereinfachung sind ferner nur die Lichtempfänger 14 und die V-förmigen Umlenkelemente 30 der beiden Empfangsmodule 12 dargestellt. Die Empfangsmodule 12 sind derart angeordnet, dass sich die jeweiligen Lichteintrittsflächen der Umlenkelemente 30 (durch quadratische Flächen repräsentiert) entlang einer in y-Richtung verlaufenden Achse verteilt sind, wobei jeweils ein Arm des einen Umlenkelements 30 zwischen die beiden Arme des anderen Umlenkelements ragt. Um diese Verschränkung der Empfangsmodule 12 zu erreichen, sind die Umlenkelemente 30 zusätzlich zueinander etwas verkippt, so dass die Lichtempfänger 14 nicht nur einen Versatz in y-Richtung aufweisen, sondern zusätzlich auch einen Versatz in x-Richtung.

Alle beispielhaften Lichtgitter 110 bis 710 können grundsätzlich als Ein-Weg-Lichtgitter, Reflexionsgitter oder als tastendes Lichtgitter ausgestaltet sein. Zusätzlich können die Lichtgitter 110 bis 710 Sendeanordnungen umfassen, die zumindest einen Lichtsender aufweisen.

Die Lichtgitter 110 bis 710 können gemäß einer bevorzugten Ausgestaltung als entfernungsmessende tastende Lichtgitter ausgestaltet sein. Hierfür kann als Lichtempfänger 14 beispielsweise ein SPAD-Array eingesetzt werden. Jedem Empfangskanal kann ein jeweiliger Lichtsender (nicht dargestellt) zugeordnet werden, wobei die Lichtsender und der Lichtempfänger 14 mit einer gemeinsamen Auswerte- und Steuereinheit verbunden sind. Die Anordnung der Lichtsender und des oder der Empfangsmodule 12 erfolgt dabei derart, dass ein von einem jeweiligen Lichtsender ausgesendeter Lichtpuls von einem ggf. im Überwachungsbereich anwesenden Objekt in Richtung des zugeordneten Empfangsmoduls 12 reflektiert wird. Die Auswerte- und Steuereinheit ist dazu eingerichtet, die Lichtlaufzeit zwischen dem Aussenden des Lichtpulses und dem Erfassen durch den Lichtempfänger 14 zu messen und daraus die Distanz des erfassten Objekts zu dem Lichtgitter zu ermitteln.

Grundsätzlich kann auch ein gemeinsamer Lichtsender für mehrere Empfangskanäle vorgesehen sein, bevorzugt für alle Empfangskanäle eines jeweiligen Empfangsmoduls 12. Hiermit kann eine Entfernungsbestimmung simultan für die mehreren Empfangskanäle erfolgen.

Vorteilhafterweise können einzelne Empfangselemente 17 deaktiviert werden, so dass nur diejenigen Empfangselemente 17 zu einem Erfassungssignal beitragen, welche tatsächlich von einem Empfangslichtfleck 20.1, 20.2 beleuchtet werden. Durch das Deaktivieren der übrigen Empfangselemente 17 kann die Störempfindlichkeit des Lichtempfängers 14 deutlich reduziert werden, was insbesondere bei einem als SPAD-Lichtempfänger ausgestalteten Lichtempfänger vorteilhaft ist. Zudem ermöglichen insbesondere SPAD-Lichtempfänger 14 in Zusammenwirken mit der Auswerte- und Steuereinheit eine schaltungstechnische Definition der Teilflächen 18.1, 18.2 innerhalb der gesamten Empfangsfläche 16 des Lichtempfängers 14.

### Bezugszeichenliste

- 110 - 710: Lichtgitter
- 10: Überwachungsbereich
- 12: Empfangsmodul
- 14: Lichtempfänger
- 16: Empfangsfläche
- 17: Empfangselemente
- 18.1, 18.2: Teilfläche
- 20.1, 20.2: Empfangslichtfleck
- 24.1 - 24.3: Empfangsachse
- 26.1 - 26.4: Empfangsoptik
- 30, 30.1, 30.2: Umlenkelement
- 32: erste Reflexionsfläche
- 34: zweite Reflexionsfläche
- 36.1, 36.2: Blende
- 40: Frontscheibe
- 42: Leiterkarte
- 44.1, 44.2: Durchtrittsöffnung

- A: Abstand der Teilflächen
- B: Basisabstand der Lichteintrittsaperturen
- X, Y, Z: Raumrichtungen

## Patentansprüche

1. Lichtgitter (110 - 710) zum Erfassen von in einem Überwachungsbereich (10) anwesenden Objekten, umfassend wenigstens ein Empfangsmodul (12), wobei das wenigstens eine Empfangsmodul (12) einen ortsauflösenden Lichtempfänger (14) mit einer lichtempfindlichen Empfangsfläche (16) und wenigstens ein Umlenkelement (30, 30.1, 30.2) umfasst und wenigstens zwei Empfangskanäle aufweist, wobei jeder Empfangskanal eine jeweilige Lichteintrittsapertur und eine durch die Lichteintrittsapertur verlaufende Empfangsachse (24.1 - 24.3) aufweist, wobei die Empfangsfläche (16) in wenigstens zwei einander nicht überlappende Teilflächen (18.1, 18.2) aufgeteilt ist, wobei jedem Empfangskanal eine jeweilige Teilfläche (18.1, 18.2) zugeordnet ist, und wobei zumindest ein Teil der Empfangsachsen (24.1 - 24.3) durch das wenigstens eine Umlenkelement (30, 30.1, 30.2) verläuft,
**dadurch gekennzeichnet,**
**dass** eine Lichteintrittsfläche, eine Lichtaustrittsfläche und/oder zumindest eine Reflexionsfläche (32, 34) eines jeweiligen Umlenkelements (30, 30.1, 30.2) eine optisch wirksame Geometrie mit strahlformenden Eigenschaften aufweisen.

2. Lichtgitter (110 - 710) nach Anspruch 1,
**dadurch gekennzeichnet,**
**dass** die Lichteintrittsaperturen von zwei benachbarten Empfangskanälen einen jeweiligen Basisabstand (B) aufweisen, welcher größer ist als der Abstand (A) der diesen Empfangskanälen zugeordneten Teilflächen (18.1, 18.2).

3. Lichtgitter (110 - 710) nach Anspruch 1 oder 2,
**dadurch gekennzeichnet,**
**dass** das Umlenkelement (30, 30.1, 30.2) als eine Spiegelanordnung, als ein Prismenelement oder als ein Lichtwellenleiter ausgebildet ist.

4. Lichtgitter (110 - 710) nach einem der vorhergehenden Ansprüche,
**dadurch gekennzeichnet,**
**dass** das Lichtgitter (110 - 710) eine Sendeanordnung zum Aussenden von Lichtsignalen in den Überwachungsbereich (10) umfasst, wobei das Lichtgitter (110 - 710) zum Ermitteln der Distanz zu einem in dem Überwachungsbereich (10) anwesenden Objekt auf der Grundlage der Lichtlaufzeit der von der Sendeanordnung ausgesendeten, von einem Objekt remittierten und von dem Lichtempfänger (14) erfassten Lichtsignale eingerichtet ist.

5. Lichtgitter (110 - 710) nach Anspruch 4,
**dadurch gekennzeichnet,**
**dass** der Lichtempfänger (14) ein SPAD-Array umfasst.

6. Lichtgitter (110 - 710) nach einem der vorhergehenden Ansprüche,
**dadurch gekennzeichnet,**
**dass** die Lichteintrittsapertur eines jeweiligen Empfangskanals durch zumindest eine Blende (36.1, 36.2) definiert ist, welche zwischen einer dem Umlenkelement (30, 30.1, 30.2) vorgeordneten Empfangsoptik (26.1 - 26.4) und einer Lichteintrittsfläche des Umlenkelements (30, 30.1, 30.2) und/oder zwischen einer Lichtaustrittsfläche des Umlenkelements (30, 30.1, 30.2) und dem Lichtempfänger (14) vorgesehen ist.

7. Lichtgitter (110 - 710) nach Anspruch 6,
**dadurch gekennzeichnet,**
**dass** die Blende (36.1, 36.2) in der Bildebene der Empfangsoptik (26.1 - 26.4) angeordnet ist, und/oder
**dass** die Blende (36.1, 36.2) auf einer Lichteintrittsfläche oder einer Lichtaustrittsfläche des Umlenkelements (30, 30.1, 30.2) angeordnet ist.

8. Lichtgitter (110 - 710) nach einem der vorhergehenden Ansprüche,
**dadurch gekennzeichnet,**
**dass** das Lichtgitter (110 - 710) zumindest eine Leiterkarte (42) aufweist, welche eine dem Überwachungsbereich (10) abgewandte und eine dem Überwachungsbereich (10) zugewandte Seite aufweist, wobei ein der Leiterkarte (42) zugeordneter Lichtempfänger (14) auf der dem Überwachungsbereich (10) abgewandten Seite angeordnet ist.

9. Lichtgitter (110 - 710) nach einem der vorhergehenden Ansprüche,
**dadurch gekennzeichnet,**
**dass** das Lichtgitter (110 - 710) mehrere Empfangsmodule (12) aufweist, welche derart verschränkt angeordnet sind, dass eine Lichteintrittsapertur eines Empfangsmoduls (12) zwischen zwei Lichteintrittsaperturen eines anderen Empfangsmoduls (12) vorgesehen ist, wobei bevorzugt alle Lichteintrittsaperturen des Lichtgitters (110 - 710) entlang einer gemeinsamen Achse angeordnet sind.

## Claims

1. A light grid (110 - 710) for detecting objects present in a monitored zone (10), said light grid (110 - 710) comprising at least one reception module (12), wherein the at least one reception module (12) comprises a spatially resolving light receiver (14), which has a light-sensitive reception surface (16), and at least one deflection element (30, 30.1, 30.2) and has at least two reception channels, wherein each reception channel has a respective light entry aperture and a reception axis (24.1 - 24.3) extending through the light entry aperture, wherein the reception surface (16) is divided into at least two non-overlapping partial surfaces (18.1, 18.2), wherein each reception channel is assigned a respective partial surface (18.1, 18.2), and wherein at least some of the reception axes (24.1 - 24.3) extend through the at least one deflection element (30, 30.1, 30.2),
**characterized in that**
a light entry surface, a light exit surface and/or at least one reflection surface (32, 34) of a respective deflection element (30, 30.1, 30.2) has/have an optically effective geometry having beam-shaping properties.

2. A light grid (110 - 710) according to claim 1,
**characterized in that**
the light entry apertures of two adjacent reception channels have a respective base spacing (B) which is greater than the spacing (A) of the partial surfaces (18.1, 18.2) assigned to these reception channels.

3. A light grid (110 - 710) according to claim 1 or 2,
**characterized in that**
the deflection element (30, 30.1, 30.2) is configured as a mirror arrangement, as a prism element or as an optical waveguide.

4. A light grid (110 - 710) according to any one of the preceding claims,
**characterized in that**
the light grid (110 - 710) comprises a transmission arrangement for transmitting light signals into the monitored zone (10), with the light grid (110 - 710) being configured to determine the distance from an object present in the monitored zone (10) on the basis of the time of flight of the light signals which are transmitted by the transmission arrangement, remitted by an object and detected by the light receiver (14).

5. A light grid (110 - 710) according to claim 4,
**characterized in that**
the light receiver (14) comprises a SPAD array (43).

6. A light grid (110 - 710) according to any one of the preceding claims,
**characterized in that**
the light entry aperture of a respective reception channel is defined by at least one diaphragm (36.1, 36.2) which is provided between a reception optics (26.1 - 26.4) arranged upstream of the deflection element (30, 30.1, 30.2) and a light entry surface of the deflection element (30, 30.1, 30.2) and/or between a light exit surface of the deflection element (30, 30.1, 30.2) and the light receiver (14).

7. A light grid (110 - 710) according to claim 6,
**characterized in that**
the diaphragm (36.1, 36.2) is arranged in the image plane of the reception optics (26.1 - 26.4), and/or
**in that** the diaphragm (36.1, 36.2) is arranged on a light entry surface or a light exit surface of the deflection element (30, 30.1, 30.2).

8. A light grid (110 - 710) according to any one of the preceding claims,
**characterized in that**
the light grid (110 - 710) has at least one printed circuit board (42) which has a side facing away from the monitored zone (10) and a side facing the monitored zone (10), wherein a light receiver (14) associated with the printed circuit board (42) is arranged on the side facing away from the monitored zone (10).

9. A light grid (110 - 710) according to any one of the preceding claims,
**characterized in that**
the light grid (110 - 710) has a plurality of reception modules (12) which are arranged interlaced such that a light entry aperture of one reception module (12) is provided between two light entry apertures of another reception module (12), wherein preferably all the light entry apertures of the light grid (110 - 710) are arranged along a common axis.

## Revendications

1. Grille lumineuse (110 - 710) de détection d'objets présents dans une zone à surveiller (10), comprenant au moins un module de réception (12), ledit au moins un module de réception (12) comportant un récepteur de lumière à résolution spatiale (14), muni d'une surface réceptrice photosensible (16), et au moins un élément de déviation (30, 30.1, 30.2) et présentant au moins deux canaux de réception, chaque canal de réception présentant une ouverture d'entrée de lumière respective et un axe de réception (24.1 - 24.3) passant par l'ouverture d'entrée de lumière, la surface réceptrice (16) étant subdivisée en au moins deux surfaces partielles (18.1, 18.2) qui ne se chevauchent pas, une surface partielle respective (18.1, 18.2) étant associée à chaque canal de réception, et au moins une partie des axes de réception (24.1 - 24.3) passant par ledit au moins un élément de déviation (30, 30.1, 30.2),
**caractérisée en ce que**
une surface d'entrée de lumière, une surface de sortie de lumière et/ou au moins une surface de réflexion (32, 34) d'un élément de déviation respectif (30, 30.1, 30.2) présentent une géométrie optiquement efficace avec des propriétés de formation de faisceau.

2. Grille lumineuse (110 - 710) selon la revendication 1,
**caractérisée en ce que**
les ouvertures d'entrée de lumière de deux canaux de réception voisins présentent un espacement de base respectif (B) qui est supérieur à l'espacement (A) des surfaces partielles (18.1, 18.2) associées à ces canaux de réception.

3. Grille lumineuse (110 - 710) selon la revendication 1 ou 2,
**caractérisée en ce que**
l'élément de déviation (30, 30.1, 30.2) est conçu comme un dispositif à miroir, comme un élément prismatique ou comme un guide d'ondes lumineuses.

4. Grille lumineuse (110 - 710) selon l'une des revendications précédentes,
**caractérisée en ce que**
la grille lumineuse (110 - 710) comprend un dispositif d'émission pour émettre des signaux lumineux dans la zone à surveiller (10), la grille lumineuse (110 - 710) étant conçue pour déterminer la distance à un objet présent dans la zone à surveiller (10) sur la base du temps de propagation des signaux lumineux émis par le dispositif d'émission, renvoyés par un objet et détectés par le récepteur de lumière (14).

5. Grille lumineuse (110 - 710) selon la revendication 4,
**caractérisée en ce que**
le récepteur de lumière (14) comprend un réseau SPAD.

6. Grille lumineuse (110 - 710) selon l'une des revendications précédentes,
**caractérisée en ce que**
l'ouverture d'entrée de lumière d'un canal de réception respectif est définie par au moins un diaphragme (36.1, 36.2) qui est disposé entre une optique de réception (26.1 - 26.4) placée en amont de l'élément de déviation (30, 30.1, 30.2) et une surface d'entrée de lumière de l'élément de déviation (30, 30.1, 30.2) et/ou entre une surface de sortie de lumière de l'élément de déviation (30, 30.1, 30.2) et le récepteur de lumière (14).

7. Grille lumineuse (110 - 710) selon la revendication 6,
**caractérisée en ce que**
le diaphragme (36.1, 36.2) est disposé dans le plan image de l'optique de réception (26.1 - 26.4), et/ou
**en ce que** le diaphragme (36.1, 36. 2) est disposé sur une surface d'entrée de lumière ou sur une surface de sortie de lumière de l'élément de déviation (30, 30.1, 30.2).

8. Grille lumineuse (110 - 710) selon l'une des revendications précédentes,
**caractérisée en ce que**
la grille lumineuse (110 - 710) comporte au moins une carte de circuit imprimé (42) qui présente une face détournée de la zone à surveiller (10) et une face tournée vers la zone à surveiller (10), un récepteur de lumière (14) associé à la carte de circuit imprimé (42) étant disposé sur la face détournée de la zone à surveiller (10).

9. Grille lumineuse (110 - 710) selon l'une des revendications précédentes,
**caractérisée en ce que**
la grille lumineuse (110 - 710) comporte plusieurs modules de réception (12) qui sont disposés de manière entrecroisée de telle sorte qu'une ouverture d'entrée de lumière d'un module de réception (12) est prévue entre deux ouvertures d'entrée de lumière d'un autre module de réception (12), toutes les ouvertures d'entrée de lumière de la grille lumineuse (110 - 710) étant de préférence disposées le long d'un axe commun.
